# EUROPÄISCHE PATENTSCHRIFT

(11) **EP 3 850 609 B1**
(45) Veröffentlichungstag und Bekanntmachung des Hinweises auf die Patenterteilung: **04.06.2025**
(21) Anmeldenummer: 19721201.2
(22) Anmeldetag: 11.04.2019
(51) Int. Cl.: G09F 9/37, G09F 21/04, B60R 13/00, B60R 13/02

(54) **FAHRZEUGZIERTEIL**
VEHICLE DECORATIVE PART
ÉLÉMENT DE GARNITURE DE VÉHICULE

(30) Priorität: 23.10.2018 DE 102018126365
(43) Veröffentlichungstag der Anmeldung: 21.07.2021
(73) Patentinhaber: HIB Trim Part Solutions GmbH, 76646 Bruchsal (DE)
(72) Erfinder: RÖCHERT, Michael, 75203 Königsbach-Stein (DE)
(74) Vertreter: Staeger & Sperling Partnerschaftsgesellschaft mbB
(86) Internationale Anmeldenummer: PCT/EP2019/059321
(87) Internationale Veröffentlichungsnummer: WO 2020/083532

(56) Entgegenhaltungen:
- WO-A1-2015/069985
- CN-U- 205 930 501
- US-A1- 2013 077 153
- US-A1- 2014 214 272
- US-A1- 2018 186 309

## Beschreibung

Die Erfindung betrifft ein Fahrzeugzierteil, insbesondere für den Innenraum eines Kraftfahrzeugs.

Gattungsbildende Zierteile sind üblicherweise statisch aufgebaut und bilden ein Designelement im Fahrzeuginnenraum, beispielsweise mit einer Holzfurnieroptik oder einer Aluminiumoptik auf der in den Fahrgastraum weisenden Sichtseite. Soweit technische Anzeigen oder eine Beleuchtung integriert werden soll, sind hierzu Displays oder Beleuchtungsmittel im Einsatz. Diese werden auch mit den Zierteilen kombiniert.

Bei den aus dem Stand der Technik bekannten Lösungen ist jedoch nachteilig, dass für die Anzeige von Informationen oder Farben stets eine Stromversorgung und Erhaltungsspannung nötig ist, um eine bestimmte Anzeige oder Farbgebung aufrecht zu erhalten. Stand der Technik zum vorliegenden technischen Gebiet ist beispielsweise offenbart in den Druckschriften WO 2015/069985 A1, US 2014/214272 A1, CN 205 930 501 U und US 2018/186309 A1

Der Erfindung liegt deshalb die Aufgabe zugrunde, ein Fahrzeugzierteil bereitzustellen, auf dessen Sichtseite variable Anzeigen erzeugbar und erhaltbar sind, ohne dass eine dauerhafte Erhaltungsspannung nötig ist.

Diese Aufgabe wird durch die Merkmalskombination gemäß Patentanspruch 1 gelöst.

Erfindungsgemäß wird ein sandwichartig aufgebautes Fahrzeugzierteil mit einem rückseitigen Trägerelement vorgeschlagen, das ausgebildet ist, an dem Fahrzeug befestigt zu werden. Das Fahrzeugzierteil umfasst ferner eine durchsichtige Oberflächenschicht, welche eine Außenfläche des Fahrzeugzierteils und im bestimmungsgemäßen Gebrauch eine dem Trägerelement gegenüberliegende Sichtseite des Fahrzeugzierteils bildet. Zwischen dem Trägerelement und der Oberflächenschicht ist eine Lage elektronisches Papier angeordnet, über welches variable Anzeigen auf der Sichtseite des Fahrzeugzierteils erzeugbar sind.

Als variable Anzeigen sind hierbei lokale Informationsanzeigen auf der Sichtseite des Zierteils in Form von Bildern oder Icons, aber auch vollflächige Veränderungen der Gesamtoptik der Sichtseite des Zierteils, beispielsweise von Schwarz auf Weiß oder Grau oder der Wechsel zwischen zwei Farben definiert. In anderen Worten verändert sich die Erscheinung des Zierteils auf dessen Sichtseite als Ganzes.

Das Trägerelement wird vorzugsweise aus Kunststoff (z.B. PE, PP, PC/ABS) gespritzt oder im Metallguss oder Aluminiumdruckguss hergestellt und bildet das Bauteil, welches zur Fixierung des Zierteils an dem Fahrzeug dient. Hierfür sind an dem Trägerelement entsprechende Befestigungsmittel wie Verrastungselemente oder Clipse vorgesehen.

Das elektronische Papier (teils auch E-Papier oder ePaper genannt) ist ein passives, nicht leuchtendes Anzeigeelement. Texte, Bilder, Icons oder Gesamtflächenfarben werden auf der Sichtseite des Fahrzeugzierteils dauerhaft angezeigt, ohne dass dafür eine Erhaltungsspannung erforderlich ist. Soweit vorliegend von Farben gesprochen wird, ist immer auch der Wechsel zwischen Schwarz und Weiß umfasst. Elektronisches Papier ist im Markt bekannt und verfügbar. Es kann auf unterschiedlichen Techniken beruhen, beispielsweise auf Elektrophorese, bistabilen LCDs, Elektrobenetzung (Electrowetting), mikromechanisch gesteuerter Interferenz-Modulation. Für die Erfindung eignet sich insbesondere die Elektropherese, wobei zwei flächige Elektroden mit zwei unterschiedlich gefärbten Pigmenten gefüllt sind, die durch einen Strom- oder Spannungsimpuls ohne Erhaltungsspannung und somit sehr energiesparend bistabile oder mehrfach stabile Zustände annehmen können. Der benötigte Strom zur Erzeugung oder dem Wechsel der Anzeige wird über das Fahrzeug bereitgestellt.

Für die Erfindung wird vorzugsweise biegsames elektronisches Papier verwendet. Erfindungsgemäß ist die Lage elektronischen Papiers auf einen Kunststoffilm laminiert. Somit kann es leicht an die Form des Trägerelements bzw. die Form des Zierteils mit seinen möglichen, Wölbungen, Kanten und/oder Phasen angepasst werden.

Ferner ist bei dem Fahrzeugzierteil in einer erfindungsgemäßen Ausführung vorgesehen, dass zwischen der Lage elektronischen Papiers und dem Trägerelement eine Metalllage, insbesondere eine Aluminiumlage oder Stahllage angeordnet ist. In einer erfindungsgemäßen Ausführung ist die Metalllage als Leiterplatte mit elektronischen Bauteilen (Kondensatoren, etc.) zur Steuerung des elektronischen Papiers ausgebildet. Gleichzeitig bietet die Metalllage für das elektronische Papier Stabilität und eine Basis zur Befestigung auf dem Trägerelement. Alternativ kann die Metalllage in einer nicht-erfindungsgemäßen Lösung um eine flexible Folie mit darauf gedruckten Leiterbahnen ergänzt oder durch eine derartige Folie ersetzt werden.

Eine günstige erfindungsgemäße Ausführung des Fahrzeugzierteils ist dadurch gekennzeichnet, dass der Kunststoffilm mit der Lage elektronischen Papiers auf die Aluminiumlage oder Stahllage auflaminiert ist.

Die transparente Oberflächenschicht, welche in der Fachwelt häufig als ''top coat" bezeichnet wird, wird vorzugsweise durch Polyurethan (PUR/DD-Lack) , Polyester oder Polymethylmethacrylat (PMMA) gebildet, so dass die Anzeigen des elektronischen Papiers von der Sichtseite erkennbar bleiben. Als Herstellungsverfahren können einfache Verfahren wie Sprühlackieren oder Übergießen verwendet werden. Zudem kann auch eine transparente Folie als Oberflächenschicht aufgeklebt werden. Bei dem Fahrzeugzierteil überdeckt die Oberflächenschicht die die gesamte Sichtseite des Fahrzeugzierteils und die gesamte Lage elektronischen Papiers..

In einer Weiterbildung weist das Fahrzeugzierteil einen Lichtsensor auf, über welchen die Anzeigen auf der Sichtseite des Fahrzeugzierteils in Abhängigkeit von einer auf die Oberflächenschicht fallenden Lichtmenge steuerbar sind. Der Lichtsensor wird vorzugsweise in einen Randabschnitt der Metalllage integriert oder daran befestigt. Durch die Integration des Lichtsensors kann das Fahrzeugzierteil beispielsweise bei Dunkelheit in eine helle, beispielsweise weiße Oberflächenfarbe geändert werden und bei ausreichend heller Umgebung in eine dunkle, beispielsweise schwarze Oberflächenfarbe wechseln. Die möglichen "Farben" sind anfänglich bei der Herstellung des Fahrzeugzierteils festzulegen. Auch ist möglich, dass das Fahrzeugzierteil einen im Fahrzeug bereits vorgesehenen Lichtsensor nutzt und mit diesem signaltechnisch verbunden ist, um die Lichtmenge zu steuern.

Alternativ oder zusätzlich sieht eine weitere Ausführungsform vor, dass das Fahrzeugzierteil einen Temperatursensor aufweist, über welchen die Anzeigen auf der Sichtseite des Fahrzeugzierteils in Abhängigkeit von einer auf die Oberflächenschicht einwirkenden Lufttemperatur steuerbar sind. Beispielsweise kann das Zierteil über das elektronische Papier blau anmuten, solange das Fahrzeug gekühlt wird, und als alternative Farbe Rot wiedergeben, solange das Fahrzeug aufgeheizt wird. Auch ist möglich, dass das Fahrzeugzierteil einen im Fahrzeug bereits vorgesehenen Temperatursensor, beispielsweise zur Steuerung der Innenraumtemperatur, nutzt und mit diesem signaltechnisch verbunden ist, um die Anzeigen zu steuern.

Für derartige Ausführungen ist vorteilhaft, wenn sich die Lage elektronischen Papiers vollflächig über eine gesamte sichtseitige Oberfläche des Fahrzeugzierteils erstreckt.

Bei dem Fahrzeugzierteil ist insbesondere vorgesehen, dass alle Lagen sandwichartig im Wesentlichen gleich ausgebildet sind und zueinander passende Formen aufweisen. Somit ist vorzugsweise ferner vorgesehen, dass sich die Metalllage vollflächig über eine gesamte zu Sichtseite weisende Oberfläche des Trägerelements des Fahrzeugzierteils erstreckt.

Andere vorteilhafte Weiterbildungen der Erfindung sind in den Unteransprüchen gekennzeichnet bzw. werden nachstehend zusammen mit der Beschreibung einer Ausführung der Erfindung anhand der Figur näher dargestellt. Es zeigt:

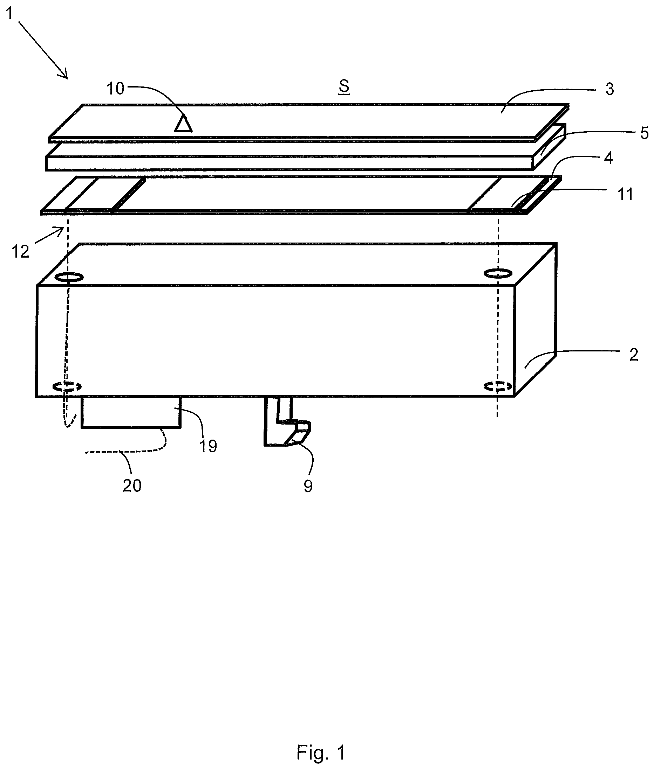

- Fig. 1: eine schematische Explosionsdarstellung eines Fahrzeugzierteils.

In Figur 1 ist eine schematische Explosionsdarstellung eines Fahrzeugzierteils 1 in sandwichbauweise dargestellt. Als Basis dient ein rückseitiges Trägerelement 2 mit daran ausgebildeten Befestigungshaken 9, über welche das Fahrzeugzierteil 1 im Fahrzeug befestigt wird. Auf dem Trägerelement 2 folgen die Metalllage 4, die Lage elektronisches Papier 5 und die Oberflächenschicht 3, vorzugsweise aus PUR. Die Lage elektronisches Papier 5 ist auf die Metalllage 4 kaschiert und somit auf dem Trägerelement 2 befestigt, beispielsweise verklebt. Die Oberflächenschicht 3 kann als Sprühlack oder im Gießverfahren aufgetragen werden, vorzugsweise werden jedoch für die Massenfertigung Verfahren wie In-Mould-Decoration (IMD) oder In-Mould-Labelling (IML) verwendet.

In der gezeigten Ausführung weisen alle Lagen im Wesentlichen dieselbe Form und Kontur auf, so dass die Lage elektronisches Papier 5 vollflächig die Metalllage 4 überdeckt und von der Sichtseite S des Fahrzeugzierteils 1 ausschließlich die Lage elektronisches Papier 5 durch die Oberflächenschicht 3 zu erkennen ist. Auf dem Trägerelement 2 kann die Anordnung der übrigen Lagen in einer nicht gezeigten Ausführung jedoch auch nur abschnittsweise erfolgen. Die Metalllage 4 fungiert zudem als Leiterplatte und umfasst alle Leiterbahnen 11 zur Steuerung des elektronischen Papiers 5. Auch sind daran die Anschlüsse 12 zur Strom- und Signalübertragung von dem Fahrzeug oder externen Geräten, beispielsweise über NFC, integriert. An dem Trägerelement 2 ist eine Steuereinheit 19 angeordnet, über welche die Anzeigen der Lage elektronischen Papiers 5 gesteuert werden. Zudem können ein Lichtsensor und ein Temperaturensor integriert werden, welche die Anzeigenart, -helligkeit oder -farbe beeinflussen bzw. bestimmen. Die Steuereinheit 19 ist über Leitungen 12 und 20 sowohl mit der Lage elektronisches Papier 5 als auch mit dem angeschlossenen Fahrzeug verbunden, von welchem insbesondere der Input für die Anzeigen des elektronischen Papiers 5 und die Stromversorgung erhalten werden..

Über die Lage elektronischen Papiers 5 können auf der Sichtseite des Fahrzeugzierteils lokal Symbole, Bilder, Texte wiedergeben werden. Zudem kann die gesamte Fläche der Sichtseite zumindest zwischen zwei Farben wechseln. Soweit Weiterentwicklungen des elektronischen Papiers mit mehreren Farben folgen, sind diese natürlich entsprechend einsetzbar. Die entsprechende Ansteuerung erfolgt über die für elektronisches Papier in der Technik bekannte Verfahren. Zudem ist in einer Weiterbildung an dem Fahrzeugzierteil 1 eine Bedienstelle 10 vorgesehen, an welcher der Bediener beispielsweise per Druck eine Änderung der Farbe des elektronischen Papiers 5 auslöst und somit die Darstellung aktiv steuert. Hierzu kann auf der Metalllage 4 beispielsweise ein Drucksensor (nicht gezeigt) hinter der Bedienstellte 10 positioniert sein, welcher mit der Steuerung der Lage elektronischen Papiers 5 verbunden ist. Über die Bedienstelle 10 lassen sich ferner variable Funktionen darstellen, wobei sich das gezeigte Bild verändert, um die der Bedienstelle 10 hinterlegte Schaltereigenschaft zu repräsentieren, d.h. durch die variable Darstellung des Schaltflächenlayouts auf der Sichtseite wird ermöglicht, dass die Betätigung verschiedener Funktionen (z.B. Sitzverstellung, Fensterheber oder Rückspiegeleinstellung etc.) an immer derselben Position auf dem Fahrzeugzierteil ausgeführt werden kann. Somit gibt es auf dem Fahrzeugzierteil nur noch einen einziger Bereich, der als Bedienstelle genutzt wird, um verschiedene Funktionen auszuführen.

## Patentansprüche

1. Fahrzeugzierteil (1) mit einem rückseitigen Trägerelement (2), das ausgebildet ist, an dem Fahrzeug befestigt zu werden, einer Oberflächenschicht (3), welche eine Außenfläche des Fahrzeugzierteils (1) und im bestimmungsgemäßen Gebrauch eine dem Trägerelement (2) gegenüberliegende Sichtseite (S) des Fahrzeugzierteils (1) bildet, wobei zwischen dem Trägerelement (2) und der Oberflächenschicht (3) eine Lage elektronisches Papier (5) angeordnet ist, über welches variable Anzeigen auf der Sichtseite (S) des Fahrzeugzierteils (1) erzeugbar sind,
**dadurch gekennzeichnet, dass** die Lage elektronischen Papiers (5) auf einen Kunststoffilm laminiert ist, wobei zwischen der Lage elektronischen Papiers (5) und dem Trägerelement (2) eine Metalllage (4) angeordnet ist, wobei der Kunststoffilm mit der Lage elektronischen Papiers (5) auf die Metalllage (4) auflaminiert ist, und wobei
die Metalllage (4) als Leiterplatte mit elektronischen Bauteilen zur Steuerung des elektronischen Papiers (5) ausgebildet ist.

2. Fahrzeugzierteil nach einem der vorigen Ansprüche, **dadurch gekennzeichnet, dass** die Oberflächenschicht (3) aus Kunststoff gebildet ist, wobei die Oberflächenschicht (3) die gesamte Sichtseite (S) des Fahrzeugzierteils (1) und die gesamte Lage elektronischen Papiers (5) überdeckt.

3. Fahrzeugzierteil nach einem der vorigen Ansprüche, **dadurch gekennzeichnet, dass** es einen Lichtsensor (7) aufweist, über welchen die Anzeigen auf der Sichtseite des Fahrzeugzierteils (1) in Abhängigkeit von einer auf die Oberflächenschicht (3) fallenden Lichtmenge steuerbar sind.

4. Fahrzeugzierteil nach einem der vorigen Ansprüche, **dadurch gekennzeichnet, dass** es einen Temperatursensor (8) aufweist, über welchen die Anzeigen auf der Sichtseite (S) des Fahrzeugzierteils (1) in Abhängigkeit von einer auf die Oberflächenschicht (3) einwirkenden Lufttemperatur steuerbar sind.

5. Fahrzeugzierteil nach einem der vorigen Ansprüche, **dadurch gekennzeichnet, dass** sich die Lage elektronischen Papiers (5) vollflächig über eine gesamte sichtseitige Oberfläche des Fahrzeugzierteils (1) erstreckt.

6. Fahrzeugzierteil nach einem der vorigen Ansprüche, **dadurch gekennzeichnet, dass** sich die Metalllage (4) vollflächig über eine gesamte zu Sichtseite weisende Oberfläche des Trägerelements (2) des Fahrzeugzierteils (1) erstreckt.

7. Fahrzeugzierteil nach einem der vorigen Ansprüche, **dadurch gekennzeichnet, dass** es einen Sandwichaufbau gebildet aus den Lagen des Trägerelements (2), anschließend der Metalllage (4), anschließend der Lage elektronischen Papiers (5) und anschließend der Oberflächenschicht (3) aufweist.

8. Fahrzeugzierteil nach einem der vorigen Ansprüche, **dadurch gekennzeichnet, dass** es ausgebildet ist, über die Lage elektronisches Papier (5) erhaltungsspannungsfrei variable Anzeigen auf der Sichtseite (S) des Fahrzeugzierteils (1) zu erzeugen.

9. Fahrzeugzierteil nach einem der vorigen Ansprüche, **dadurch gekennzeichnet, dass** es eine positionsfeste Bedienstelle (10) aufweist, über welche eine Darstellung variabler Funktionen ermöglicht ist, wobei ein an der Bedienstelle (10) angezeigtes Bild oder Symbol veränderbar ist, um eine der Bedienstelle (10) hinterlegte Schaltereigenschaft zu repräsentieren.

## Claims

1. A vehicle trim part (1) with a rear carrier element (2) which is designed to be attached to the vehicle, a surface layer (3) which forms an outer surface of the vehicle trim part (1), and, in normal use, a visible side (S) of the vehicle trim part (1) opposite the carrier element (2), wherein a layer of electronic paper (5) is arranged between the carrier element (2) and the surface layer (3) via which variable displays can be generated on the visible side (S) of the vehicle trim part (1),
**characterized in that** the layer of electronic paper (5) is laminated onto a plastic film, wherein a metal layer (4) is arranged between the layer of electronic paper (5) and the carrier element (2), wherein the plastic film is laminated onto the metal layer (4) with the layer of electronic paper (5), and wherein the metal layer (4) is embodied as a circuit board with electronic components for controlling the electronic paper (5).

2. The vehicle trim part according to any one of the preceding claims, **characterized in that** the surface layer (3) is made of plastic, the surface layer (3) covering the entire visible side (S) of the vehicle trim part (1) and the entire layer of electronic paper (5).

3. The vehicle trim part according to any one of the preceding claims, **characterized in that** it has a light sensor (7) via which the displays on the visible side of the vehicle trim part (1) can be controlled as a function of an amount of light incident upon the surface layer (3).

4. The vehicle trim part according to any one of the preceding claims, **characterized in that** it has a temperature sensor (8) via which the displays on the visible side (S) of the vehicle trim part (1) can be controlled as a function of an air temperature acting on the surface layer (3).

5. The vehicle trim part according to any one of the preceding claims, **characterized in that** the layer of electronic paper (5) extends over the entire visible surface of the vehicle trim part (1).

6. The vehicle trim part according to any one of the preceding claims, **characterized in that** the metal layer (4) extends over the entire surface of the carrier element (2) of the vehicle trim part (1) facing toward the visible side.

7. The vehicle trim part according to any one of the preceding claims, **characterized in that** it has a sandwich structure formed from the layers of the carrier element (2), then the metal layer (4), then the layer of electronic paper (5), and then the surface layer (3).

8. The vehicle trim part according to any one of the preceding claims, **characterized in that** it is designed to generate variable displays on the visible side (S) of the vehicle trim part (1) via the layer of electronic paper (5) without float voltage.

9. The vehicle trim part according to any one of the preceding claims, **characterized in that** it has a fixed operating point (10) via which a representation of variable functions is made possible, it being possible for an image or symbol displayed on the operating point (10) to be changed in order to represent a switching characteristic stored in the operating point (10).

## Revendications

1. Pièce d'habillage de véhicule (1) comprenant un élément porteur arrière (2) conçu pour être fixé au véhicule, une couche de surface (3) qui forme une surface extérieure de la pièce d'habillage de véhicule (1) et, en utilisation normale, une face visible (S) de la pièce d'habillage de véhicule (1) opposée à l'élément porteur (2), une couche de papier électronique (5) étant disposée entre l'élément porteur (2) et la couche de surface (3), par l'intermédiaire de laquelle des affichages variables peuvent être générés sur la face visible (S) de la pièce d'habillage de véhicule (1), **caractérisée en ce que** la couche de papier électronique (5) est laminée sur un film plastique, une couche métallique (4) étant disposée entre la couche de papier électronique (5) et l'élément porteur (2), le film plastique étant laminé avec la couche de papier électronique (5) sur la couche métallique (4), et
la couche métallique (4) est conçue comme une carte de circuit imprimé avec des composants électroniques pour contrôler le papier électronique (5).

2. Pièce d'habillage de véhicule selon l'une quelconque des revendications précédentes, **caractérisée en ce que** la couche de surface (3) est en matière plastique, la couche de surface (3) recouvrant la totalité de la face visible (S) de la pièce d'habillage de véhicule (1) et la totalité de la couche de papier électronique (5).

3. Pièce d'habillage de véhicule selon l'une quelconque des revendications précédentes, **caractérisée en ce qu'**elle comporte un capteur de lumière (7) par l'intermédiaire duquel les affichages sur la face visible de la pièce d'habillage de véhicule (1) peuvent être commandés en fonction d'une quantité de lumière tombant sur la couche de surface (3).

4. Pièce d'habillage de véhicule selon l'une quelconque des revendications précédentes, **caractérisée en ce qu'**elle comporte un capteur de température (8) par l'intermédiaire duquel les affichages sur la face visible (S) de la pièce d'habillage de véhicule (1) peuvent être commandés en fonction d'une température de l'air agissant sur la couche de surface (3).

5. Pièce d'habillage de véhicule selon l'une quelconque des revendications précédentes, **caractérisée en ce que** la couche de papier électronique (5) s'étend sur la totalité de la face visible de la pièce d'habillage de véhicule (1).

6. Pièce d'habillage de véhicule selon l'une quelconque des revendications précédentes, **caractérisée en ce que** la couche métallique (4) s'étend sur la totalité de la surface de l'élément porteur (2) de la pièce d'habillage de véhicule (1) tournée vers la face visible.

7. Pièce d'habillage de véhicule selon l'une quelconque des revendications précédentes, **caractérisée en ce qu'**elle présente une structure en sandwich formée des couches de l'élément porteur (2), puis de la couche métallique (4), puis de la couche de papier électronique (5) puis de la couche de surface (3).

8. Pièce d'habillage de véhicule selon l'une quelconque des revendications précédentes, **caractérisée en ce qu'**elle est conçue pour générer des affichages variables sur la face visible (S) de la pièce d'habillage de véhicule (1) via la couche de papier électronique (5) sans tension de maintien.

9. Pièce d'habillage de véhicule selon l'une quelconque des revendications précédentes, **caractérisée en ce qu'**elle présente un point de commande (10) fixe par lequel une représentation de fonctions variables est possible, une image ou un symbole affiché sur le point de commande (10) pouvant être modifié pour représenter une propriété de commutation stockée sur le point de commande (10).
